# EUROPEAN PATENT SPECIFICATION

(11) **EP 2 787 684 B1**
(45) Date of publication and mention of the grant of the patent: **09.10.2019**
(21) Application number: 12860786.8
(22) Date of filing: 29.11.2012
(51) Int. Cl.: H04B 10/07, H04Q 11/00, H04L 12/24, H04L 29/08

(54) **METHOD AND DEVICE FOR PROTECTING PASSIVE OPTICAL NETWORK (PON)**
VERFAHREN UND VORRICHTUNG ZUM SCHUTZ EINES PASSIVEN OPTISCHEN NETZWERKS (PON)
PROCÉDÉ ET DISPOSITIF DE PROTECTION DE RÉSEAU OPTIQUE PASSIF (PON)

(30) Priority: 20.12.2011 CN 201110429051
(43) Date of publication of application: 08.10.2014
(73) Proprietor: Huawei Technologies Co., Ltd., Longgang District Shenzhen, Guangdong 518129 (CN)
(72) Inventor: JIANG, Yuanlong, Shenzhen Guangdong 518129 (CN); LI, Hongyu, Shenzhen Guangdong 518129 (CN)
(74) Representative: Körber, Martin Hans
(86) International application number: PCT/CN2012/085509
(87) International publication number: WO 2013/091471

(56) References cited:
- WO-A1-2009/050459
- WO-A1-2010/130210
- WO-A1-2012/042191
- CN-A- 1 968 175
- CN-A- 101 340 351
- CN-A- 101 651 495
- CN-A- 101 822 070

## Description

### TECHNICAL FIELD

The present invention belongs to the field of passive optical networks (passive optical network, PON), and in particular, to a PON protection method and apparatus.

### BACKGROUND

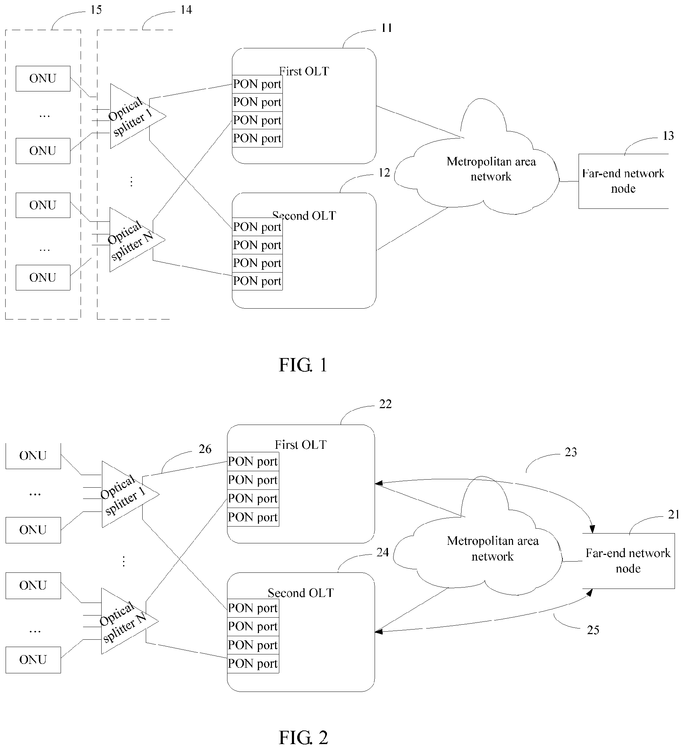

FIG. 1 shows a typical PON access network with high reliability. As shown in FIG. 1, a first optical line terminal (optical line terminal, OLT) 11 and a second OLT 12 that serves as a backup are separately connected to a far-end network node 13 through an uplink network (or a direct physical link), and each optical splitter 14 is connected to a plurality of optical network units (optical network unit, ONU) 15, and dual-homed to PON ports that are in mutual protection on the first OLT 11 and the second OLT 12, and the first OLT 11 and the second OLT 12 may be connected to up to hundreds of optical splitters 14, and provide an access service for up to tens of thousands of ONUs 15, thereby implementing service protection with a backup.

In the foregoing network application scenario, among two OLTs that are connected to one ONU by using an optical splitter, only the first OLT operates normally for the ONU, and a PON port of the second OLT is prohibited from sending a data flow to the ONU. When it is found that a fault occurs on an optical path connected between one optical splitter and the first OLT, PON port switching is performed on the first OLT and the second OLT, that is, a PON port that is on the first OLT and provides optical path access for the optical splitter is switched to a corresponding PON port on the second OLT, so that a second optical path from the optical splitter to the second OLT is available, and further, all ONUs on the optical splitter receive and send a data flow by using the second OLT.

However, when PON port switching is performed on the first OLT and the second OLT, the far-end network node cannot sense the fault on the optical path, so that a downlink data flow corresponding to the ONU on the optical splitter is still sent by the far-end network node to the first OLT, thereby causing interruption of a user service.

For the foregoing problem, an existing protection technology is that: an active path and a standby path are configured between each ONU and a far-end network node, and operation and maintenance (operation and maintenance, OAM) is performed on both the active path and the standby path to detect an end-to-end path fault. However, in this method, tens of thousands of active and standby paths need to be established between ONUs and the far-end network node, OAM needs to be configured for each ONU, and corresponding OAM and a protection state machine are maintained on the far-end network node. Therefore, configuration and management are very complex.

WO 2012 042 191 A1 discloses a passive optical network using existing GPON OAM functionality and standard routing protocol messages to solve the downstream routing problem between an access service provider and one or more other communication provider networks.

WO 2010 130210 A1 relates to a method for message transmission in passive optical network. The method mainly includes that a backup optical line termination receives an uplink message sent from an optical network unit; and when a main/backup switch occurs, it sends the uplink message carrying port information.

### SUMMARY

An objective of embodiments of the present invention is to provide a PON protection method according to claim 1.

Another objective of the embodiments of the present invention is to provide a PON protection method according to claim 8.

Another objective of the embodiments of the present invention is to provide a PON protection apparatus according to claim 12.

Another objective of the embodiments of the present invention is to provide a PON protection apparatus according to claim 14.

In the embodiments of the present invention, for one PON port or a group of PON ports of each OLT, a transmission path in active and standby protection is established between a far-end network node and a first OLT and between the far-end network node and a second OLT to transmit an ONU service; and a service fault is monitored, and therefore when a fault occurs on an access optical path connected to the first OLT, a PON port of the OLT, or a transmission path between the OLT and the far-end network node, a service can be switched to a corresponding backup path in time, thereby greatly reducing complexity of configuration and management of a PON access network, reducing a performance requirement of a far-end network node, and improving system scalability.

### BRIEF DESCRIPTION OF DRAWINGS

FIG. 1 is a schematic structural diagram of a PON network in the prior art;
FIG. 2 is a schematic structural diagram of a PON network according to an embodiment of the present invention;
FIG. 3 is a flowchart of implementing a PON protection method according to an embodiment of the present invention;
FIG. 4 is a flowchart of implementing a PON protection method by using an OLT as an execution body according to an embodiment of the present invention;
FIG. 5 is a flowchart of implementing a PON protection method by using a far-end network node as an execution body according to an embodiment of the present invention;
FIG. 6 is a flowchart of implementing a PON protection method in which an OLT uplink network is an Ethernet network;

Another objective of the embodiments of the present invention is to provide a PON protection method, where the method is applied to a first OLT on a PON access network, and the method includes:
establishing a first transmission path between the first OLT and a far-end network node to transmit a data flow of one PON port or a group of PON ports on the first OLT, where the first transmission path and a second transmission path that is established between a second OLT and the far-end network node serve as an active transmission path and a standby transmission path mutually; and
when a fault occurs on an optical path connected to the first OLT, switching a PON port corresponding to the optical path to a corresponding PON port on the second OLT, and sending a fault notification to the far-end network node, so that the far-end network node switches a data flow of the PON port corresponding to the optical path from the first transmission path to the second transmission path, where the fault notification includes an identifier of the PON port corresponding to the optical path.

Another objective of the embodiments of the present invention is to provide a PON protection apparatus, where the apparatus includes:
a path establishing module, configured to establish a first transmission path with a first OLT to transmit a data flow of one PON port or a group of PON ports on the first OLT; and establish a second transmission path with a second OLT to transmit a data flow of one PON port or a group of PON ports on the second OLT;
a fault notification receiving module, configured to, when a fault occurs on an optical path connected to the first OLT and after the first OLT switches a PON port corresponding to the optical path to a corresponding PON port on the second OLT, receive a fault notification sent by the first OLT; and
a path switching module, configured to switch a data flow of the PON port corresponding to the optical path from the first transmission path to the second transmission path.

Another objective of the embodiments of the present invention is to provide a PON protection apparatus, where the apparatus includes:
a path establishing module, configured to establish a first transmission path between a first OLT and a far-end network node to transmit a data flow of one PON port or a group of PON ports on the first OLT, where the first transmission path and a second transmission path that is established between a second OLT and the far-end network node serve as an active transmission path and a standby transmission path mutually;
a PON port switching module, configured to switch a PON port corresponding to an optical path to a corresponding PON port on the second OLT when a fault occurs on the optical path connected to the first OLT; and
a fault notifying module, configured to send a fault notification to the far-end network node when the fault occurs on the optical path, where the fault notification includes an identifier of the PON port corresponding to the optical path.

In the embodiments of the present invention, for one PON port or a group of PON ports of each OLT, a transmission path in active and standby protection is established between a far-end network node and a first OLT and between the far-end network node and a second OLT to transmit an ONU service; and a service fault is monitored, and therefore when a fault occurs on an access optical path connected to the first OLT, a PON port of the OLT, or a transmission path between the OLT and the far-end network node, a service can be switched to a corresponding backup path in time, thereby greatly reducing complexity of configuration and management of a PON access network, reducing a performance requirement of a far-end network node, and improving system scalability.

### BRIEF DESCRIPTION OF DRAWINGS

FIG. 1 is a schematic structural diagram of a PON network in the prior art;
FIG. 2 is a schematic structural diagram of a PON network according to an embodiment of the present invention;

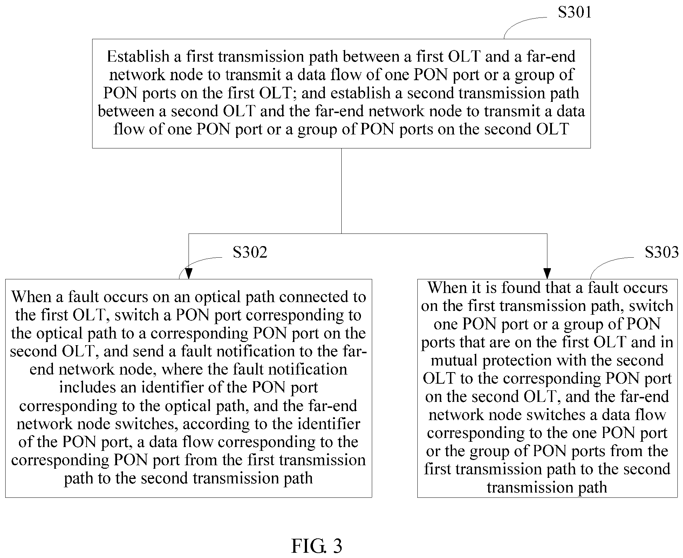

FIG. 3 is a flowchart of implementing a PON protection method according to an embodiment of the present invention;

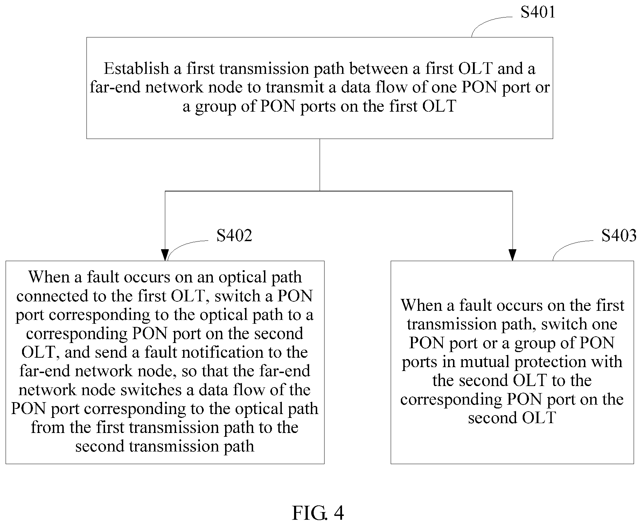

FIG. 4 is a flowchart of implementing a PON protection method by using an OLT as an execution body according to an embodiment of the present invention;

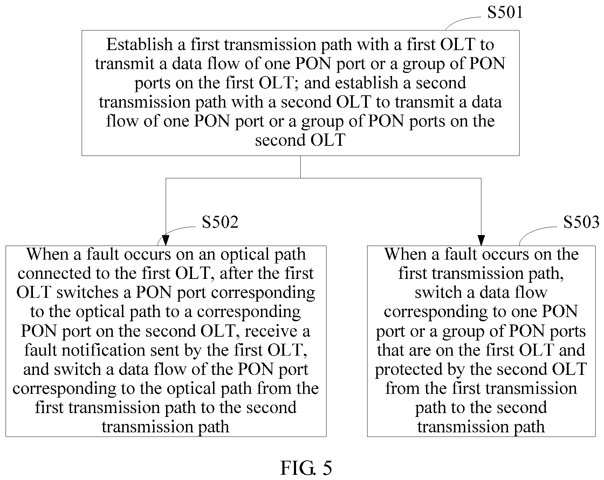

FIG. 5 is a flowchart of implementing a PON protection method by using a far-end network node as an execution body according to an embodiment of the present invention;

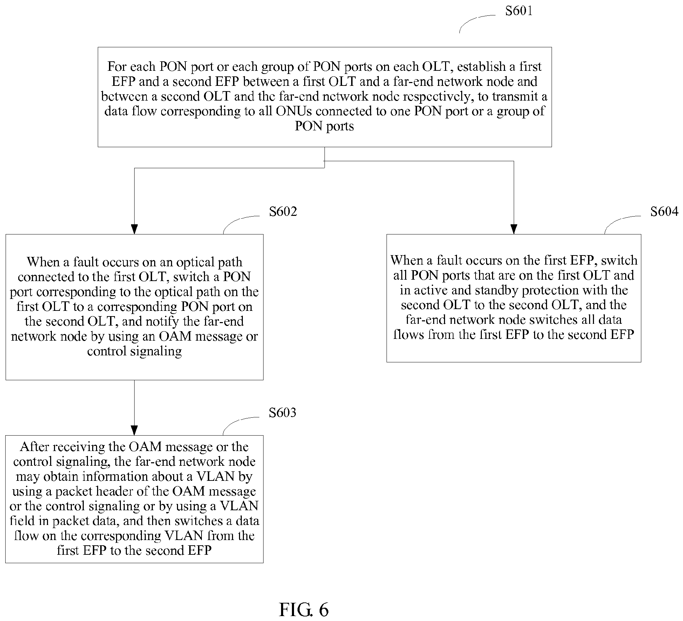

FIG. 6 is a flowchart of implementing a PON protection method in which an OLT uplink network is an Ethernet network;

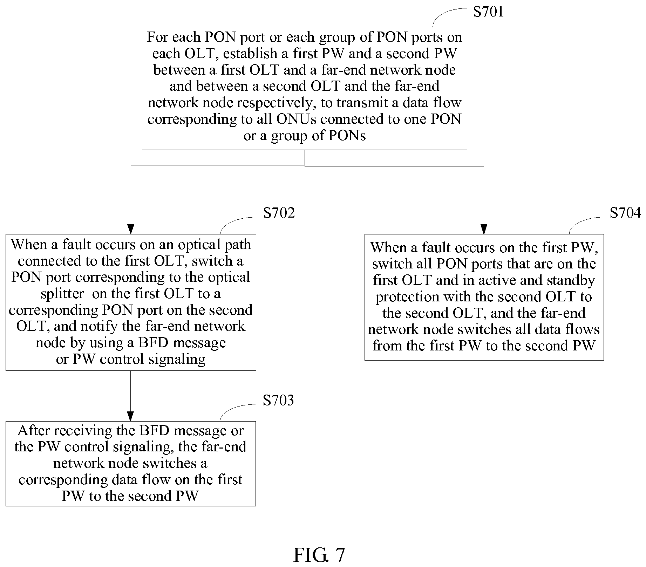

FIG. 7 is a flowchart of implementing a PON protection method in which an OLT uplink network is a multi-protocol label switching (multi-protocol label switching, MPLS) network;

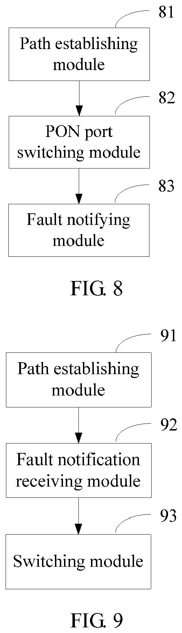

FIG. 8 is a schematic structural diagram of a PON protection apparatus according to an embodiment of the present invention; and
FIG. 9 is a schematic structural diagram of a PON protection apparatus according to another embodiment of the present invention.

### DESCRIPTION OF EMBODIMENTS

To make the objectives, technical solutions, and advantages of the present invention clearer, the following further describes the present invention in detail with reference to the accompanying drawings and embodiments. It should be understood that the specific embodiments described herein are only intended to explain the present invention, but are not intended to limit the present invention.

A network deployment scenario of the embodiments of the present invention is shown in FIG. 2. In comparison with the prior art, in the embodiments of the present invention, a path is not established for each ONU, but for one PON port or a group of PON ports of each OLT. A first transmission path 23 is established between a far-end network node 21 and a first OLT 22, and a second transmission path 25 is established between the far-end network node 21 and a second OLT 24, so as to transmit a data flow of their subordinate ONUs; and an access port is monitored, and when it is found that a fault occurs on an optical path that is connected to the first OLT 22, for example, an optical path 26, the first OLT 22 sends a fault notification to the far-end network node 21 while performing PON port switching, where the fault notification includes an identifier of a PON port corresponding to the optical path 26, so that the far-end network node 21 can switch a corresponding data flow to the standby transmission path 25. Further, the first transmission path 23 is monitored; and when it is found that a fault occurs on the first transmission path 23, the first OLT 22 performs switching on one PON port or a group of PON ports that are protected, and the far-end network node 21 switches a corresponding data flow to the second transmission path 25. Because the number of PON ports on a PON network is generally far less than the number of its ONUs, this method greatly reduces complexity of configuration and management of a PON access network.

It should be noted that, in the present invention, an ONU further includes a device in a form of an optical terminal, such as an optical network terminal (optical network terminal, ONT), a multi dwelling unit (multi dwelling unit, MDU), or a multi tenant unit (multi tenant unit, MTU); and a far-end network node may be a network node, such as a switch/router, a broadband remote access server (broadband remote access server, BRAS), a broadband network gateway (broadband network gateway, BNG), or an IP edge node, which are both not limited herein.

FIG. 3 shows a process of implementing a PON protection method provided in an embodiment of the present invention. With reference to FIG. 2, the method is described in detail as follows:
In step S301, a first transmission path is established between a first OLT and a far-end network node to transmit a data flow of one PON port or a group of PON ports on the first OLT; and a second transmission path is established between a second OLT and the far-end network node to transmit a data flow of one PON port or a group of PON ports on the second OLT.

In a case that a data flow of one PON port is transmitted on each transmission path, for each PON port that is between the first OLT and the second OLT and is protected in an active and standby manner (or for each dual-homed optical splitter), a first transmission path and a second transmission path need to be established between the first OLT and the far-end network node and between the second OLT and the far-end network node, and are used to transmit a data flow of the PON port as an active transmission path and a standby transmission path respectively. In this case, in the present invention, description is made only for a protection mechanism of a single PON port, and protection for other PON ports is the same.

In a case that a data flow of a group of PON ports is transmitted on each transmission path, preferably, only one transmission path may be configured for all protected PON ports on the first OLT and all corresponding protected PON ports on the second OLT separately, that is, one active transmission path and one standby transmission path that are configured are corresponding to an active PON port and a standby PON port that are protected by two OLTs in a dual-homed manner respectively. In this case, each path is used to transmit a data flow of all PON ports on each OLT, thereby further improving network scalability.

In the two cases, on the far-end network node, the active transmission path and the standby transmission path form a mutual protection association relationship. In addition, to ensure reliability, it is preferred that the two transmission paths are physically isolated from each other (except two end points of the paths).

In step S302, when a fault occurs on an optical path connected to the first OLT, a PON port corresponding to the optical path is switched to a corresponding PON port on the second OLT, and a fault notification is sent to the far-end network node, where the fault notification includes an identifier of the PON port corresponding to the optical path, and the far-end network node switches, according to the identifier of the PON port, a data flow corresponding to the corresponding PON port from the first transmission path to the second transmission path. The optical path connected to the first OLT refers to an optical path that connects an optical splitter to the first OLT, such as the optical path 26 in FIG. 2.

In this step, when the fault occurs on the optical path connected to the first OLT, the first OLT senses the fault in time, and performs switching on the PON port corresponding to the optical path and the corresponding PON port on the second OLT, that is, protection switching is implemented. The switching process is an existing PON technology, and may be completed by detection of a PON port of the second OLT or negotiation between the first OLT and the second OLT. In addition, the first OLT sends the fault notification to the far-end network node by using corresponding OAM or control signaling, so that the far-end network node switches the data flow of the PON port corresponding to the optical path from the first transmission path to the second transmission path after receiving the notification, and the second OLT receives and sends the corresponding data flow.

In a case that a data flow of one PON port is transmitted on each transmission path, a fault only needs to be simply notified to a far-end network node by using OAM or control signaling. However, in a case that a data flow of a group of PON ports is transmitted on each transmission path, different PON ports (or different optical paths) connected to an OLT need to be further distinguished in a fault notification, so that when a fault on a PON port or a fault on an optical path occurs, a far-end network node can learn a data flow that requires switching. In this case, according to an actual network application scenario, information such as a virtual local area network (Virtual Local Area Network, VLAN) identifier or a PW identifier may be carried by using an extension TLV (type-length-value) field in OAM or control signaling, so as to distinguish data flows corresponding to different PON ports, so that a far-end network node can switch a corresponding data flow according to the corresponding VLAN identifier or the PW identifier.

In this embodiment, the control signaling used when the fault is notified to the far-end network node is decided by a specific network application scenario, and two specific examples are described in a subsequent embodiment.

It should be noted that, the foregoing method is also applicable to a case in which a fault occurs on a PON port of the first OLT, where a specific protection principle is the same as the foregoing, and is not repeatedly described herein.

In this embodiment, when it is found that the fault occurs on the optical path connected to the first OLT, by using the OAM or control signaling sent by the first OLT, the far-end network node can receive the fault notification in time, and switch, according to the identifier that is of the PON port corresponding to the optical path and is included in the notification, the corresponding data flow to the second transmission path, and the second OLT receives and sends the data flow. A corresponding first transmission path and second transmission path only need to be established for each PON port or each group of PON ports of each OLT, and a path does not need to be established for each ONU, thereby greatly reducing complexity of configuration and management of a PON access network, and greatly reducing a performance requirement of a far-end network node, and further improving network scalability.

In addition, in this embodiment, a process of implementing a PON protection method when a fault occurs on a transmission path is as follows:
In step S303, when it is found that a fault occurs on the first transmission path, one PON port or a group of PON ports that are in mutual protection with the second OLT on the first OLT are switched to the corresponding PON port on the second OLT, and the far-end network node switches a data flow corresponding to the one PON port or the group of PON ports from the first transmission path to the second transmission path.

Fault detection of a transmission path is that corresponding OAM may be performed on the first transmission path and the second transmission path, and is applicable to Ethernet OAM on the Ethernet, or applicable to OAM on an MPLS network; or, control signaling is used when the control signaling shares a same path (in-line) with transmitted data, for example, an in-line Access Node Control Protocol (Access Node Control Protocol, ANCP) or in-line Targeted Label Distribution Protocol (Targeted Label Distribution Protocol, T-LDP). On the first transmission path and the second transmission path, the first OLT and the second OLT periodically and continuously send a detection packet to the remote-network node each other in an uplink direction, a downlink direction, or both uplink and downlink directions separately, so as to perform fault monitoring on the transmission paths. In the foregoing measures, each operating OLT can sense a fault of a transmission path that is connected to the OLT in a downlink direction in time, a far-end network node can sense a fault of a transmission path that is connected to the far-end network node in an uplink direction in time, and the OLTs and the far-end network node can also notify the fault situation to each other by using corresponding reverse OAM or control signaling.

Therefore, when a fault of the first transmission path occurs on its downlink, the first OLT can directly sense the fault by using OAM continuity detection; and when a fault occurs on an uplink of the first transmission path, the first OLT can sense the fault by receiving a reverse fault report sent by the far-end network node. After it is detected that a fault occurs on the first transmission path, PON ports corresponding to the transmission path on the first OLT and the second OLT are switched, that is, one PON port or a group of PON ports that are on the first OLT and protected by the second OLT in an active and standby manner are switched to a corresponding PON port on the second OLT. A principle of a specific PON port switching method is the same as that of the PON port switching technology described in step S302, and is not repeatedly described herein.

Similarly, when a fault of the first transmission path occurs on an uplink of the first transmission path, the far-end network node can directly sense the fault by using OAM continuity detection; and when a fault occurs on a downlink of the first transmission path, the far-end network node can sense the fault by receiving a reverse fault notification sent by the first OLT. After receiving the reverse fault notification, the remote network node switches a corresponding data flow from the first transmission path to the second transmission path according to the identifier that is of the PON port corresponding to the optical path and is included in the fault notification.

Therefore, when a fault occurs on a transmission path between the first OLT and the far-end network node, no matter the fault occurs in an uplink direction or a downlink direction of the transmission path, a data flow corresponding to one PON port or a group of PON ports is eventually received and sent by the second OLT after switching, and is transmitted by the second transmission path, so that a faulty service can be quickly recovered.

FIG. 4 shows a process of implementing a PON protection method provided in an embodiment of the present invention. In this embodiment, an execution body of the process is an OLT on a PON access network. The specific process is described in detail as follows:
In step S401, a first transmission path between a first OLT and a far-end network node is established to transmit a data flow of one PON port or a group of PON ports on the first OLT, where the first transmission path and a second transmission path that is established between a second OLT and the far-end network node serve as an active transmission path and a standby transmission path mutually.

In step S402, when a fault occurs on an optical path connected to the first OLT, a PON port corresponding to the optical path is switched to a corresponding PON port on the second OLT, and a fault notification is sent to the far-end network node, so that the far-end network node switches a data flow of the PON port corresponding to the optical path from the first transmission path to the second transmission path, where the fault notification includes an identifier of the PON port corresponding to the optical path.

In step S403, when a fault occurs on the first transmission path, one PON port or a group of PON ports that are in mutual protection with the second OLT are switched to the corresponding PON port on the second OLT.

FIG. 5 shows a process of implementing a PON protection method provided in an embodiment of the present invention. In this embodiment, an execution body of the process is a far-end network node on a PON access network. The specific process is described in detail as follows:
In step S501, a first transmission path with a first OLT is established to transmit a data flow of one PON port or a group of PON ports on the first OLT; and a second transmission path with a second OLT is established to transmit a data flow of one PON port or a group of PON ports on the second OLT, where the first transmission path and the second transmission path serve as an active transmission path and a standby transmission path mutually.

In step S502, when a fault occurs on an optical path connected to the first OLT, after the first OLT switches a PON port corresponding to the optical path to a corresponding PON port on the second OLT, a fault notification sent by the first OLT is received, and a data flow of the PON port corresponding to the optical path is switched from the first transmission path to the second transmission path.

In step S503, when a fault occurs on the first transmission path, a data flow corresponding to one PON port or a group of PON ports that are on the first OLT and protected by the second OLT is switched from the first transmission path to the second transmission path.

The embodiments shown in FIG. 4 and FIG. 5 further supplement FIG. 3 from different perspectives. For characteristics that are not described in the embodiments, reference may be made to the description of FIG. 3.

The following provides specific embodiments for different cases where an OLT uplink network is an Ethernet network or an MPLS network respectively, and provides detailed description for the PON protection method shown in FIG. 3, FIG. 4, and FIG. 5.

First, FIG. 6 shows a process of implementing a PON protection method by using an OLT uplink network as an Ethernet network. Details are as follows:
In step S601, for each PON port or each group of PON ports on each OLT, a first Ethernet forwarding path (Ethernet Forwarding Path, EFP) and a second EFP are established between a first OLT and a far-end network node and between a second OLT and the far-end network node respectively, to transmit a data flow corresponding to all ONUs that are connected to one PON port or a group of PON ports, where the first EFP and the second EFP serve as an active transmission path and a standby transmission path mutually.

In this embodiment, an EFP is a point-to-point Ethernet forwarding path, and may be identified by using a VLAN, a port, or a combination of a VLAN and a port. Preferably, the EFP may identify, by using a virtual local area network (Virtual Local Area Network, VLAN), a data flow that passes through a specific PON port of an OLT.

Generally, data flows of different services (for example, Internet, IPTV, and VoIP) of one PON port or a group of PON ports of the OLT may be distinguished by using one or more virtual local area network (Virtual Local Area Network, VLAN) identifiers when passing through an uplink network. Correspondingly, one EFP may be established for each VLAN (a layer of VLAN label is additionally added to a packet header, and a single EFP is established for the added outer-layer VLAN, thereby avoiding establishment of a plurality of EFPs). Therefore, the one PON port or the group of PON ports on the OLT may be corresponding to one or more EFPs.

In step S602, when it is found that a fault occurs on an optical path connected to the first OLT, a PON port corresponding to the optical path on the first OLT is switched to a corresponding PON port on the second OLT, and a fault notification is sent to the far-end network node by using an OAM message or control signaling, where the fault notification includes an identifier of the PON port corresponding to the optical path.

The OAM message may be a message of a Y. 1731 client signal fail (Client Signal Fail, CSF) type, and the control signaling may be the Access Node Control Protocol (Access Node Control Protocol, ACNP) or other control signaling.

When one PON port is only corresponding to one EFP, a corresponding fault notification needs to be sent only for the EFP. When one PON port is corresponding to a plurality of EFPs, a corresponding fault notification may be sent for each EFP.

In step S603, after receiving the fault notification by using the OAM message or the control signaling, the far-end network node may obtain information about a VLAN by using a packet header of the OAM message or the control signaling or by using a VLAN field in packet data, and then switches, according to the information about the VLAN, a data flow on the corresponding VLAN from the first EFP to the second EFP, thereby implementing switching of an access service. The far-end network node may simply set a first port corresponding to the first EFP to forbidding of sending a data flow of the corresponding VLAN, and set a second port corresponding to the second EFP to allowing of sending a data flow of the corresponding VLAN.

When a fault occurs on the first EFP, a path protection method in an Ethernet application scenario is as follows:
In step S604, when it is found that the fault occurs on the first EFP, one PON port or a group of PON ports that are on the first OLT and corresponding to the EFP are switched to the second OLT, and the far-end network node switches a data flow corresponding to the one PON port or the group of PON ports from the first EFP to the second EFP.

In this step, EFP path fault detection may be completed by using Ethernet OAM or ANCP control signaling. Other control signaling with a mechanism similar to a keep-alive Keep alive mechanism may also be used to implement the EFP path fault detection.

For example, when Ethernet OAM runs, an OAM maintenance end point (Maintenance End Point, MEP) is separately configured for the first EFP and the second EFP, that is, a first MEP and a second MEP are configured on the first OLT and the far-end network node respectively, and a third MEP and a fourth MEP are configured on the second OLT and the far-end network node respectively. By configuring the OAM maintenance end points and running continuity detection of the Y.1731 protocol, end-to-end path fault monitoring can be performed on the first EFP and the second EFP.

Alternatively, when control signaling such as ANCP runs, and a packet of the control protocol is transmitted on the first EFP, a session end point may be configured on the first OLT and the far-end network node, and a session end point may be configured on the second OLT and the far-end network node. Then end-to-end path fault monitoring can also be separately performed on the first EFP and the second EFP by using a message between session end points.

Specifically, when a fault occurs on a downlink direction link of the first EFP, the first OLT cannot receive an OAM message or a control message, and therefore can directly sense the fault; and when a fault occurs on an uplink direction link of the first EFP, the first OLT can sense the fault by receiving a reverse fault notification of the far-end network node. Similarly, when the fault occurs on the uplink direction link of the first EFP, the far-end network node cannot receive an OAM message or a control message, and therefore can directly sense the fault; and when the fault occurs on the downlink direction link of the first EFP, the far-end network node can sense the fault by receiving a reverse fault notification of the first OLT.

In a case in which a data flow of one PON port is transmitted on one transmission path, the far-end network node may simply set a first port corresponding to the first transmission path to forbidding of sending a data flow of a corresponding VLAN, and set a second port corresponding to the second transmission path to allowing of sending a data flow of a corresponding VLAN. However, in a case in which a data flow of a group of PON ports is transmitted on one transmission path, preferably, an index table may be first established for all current VLANs; and when it is found that the fault occurs on the first EFP, the far-end network node can set, according to the index table, a first port corresponding to the first transmission path to forbidding of sending a data flow of a corresponding VLAN in the index table, and set a second port corresponding to the second transmission path to allowing of sending a corresponding data flow in the index table.

In the present invention, a VLAN may be a VLAN of various types, including various VLANs defined in IEEE 802.1 series standards and BBF (The Broadband Forum), such as C-VLAN, S-VLAN, QinQ VLAN, and B-VLAN.

FIG. 7 shows a process of implementing a PON protection method by using an OLT uplink network as an MPLS network. Details are as follows:
In step S701, for each PON port or each group of PON ports on each OLT, a first pseudo wire (Pseudo Wire, PW) and a second PW are established between a first OLT and a far-end network node and between a second OLT and the far-end network node respectively, to transmit a data flow corresponding to all ONUs that are connected to one PON port or a group of PON ports, where the first PW and the second PW serve as an active transmission path and a standby transmission path mutually.

In this embodiment, to ensure reliability, it is preferred that the two PWs that are established are carried on outer-layer tunnels (except two end points of the paths) of label switched paths (Label Switched Path, LSP) that do not overlap mutually, so as to avoid a single-point path fault.

In step S702, when it is found that a fault occurs on an optical path connected to the first OLT, a PON port that is corresponding to the optical path and on the first OLT is switched to a corresponding PON port on the second OLT, and a notification is sent to the far-end network node by using a bidirectional forwarding detection (bidirectional forwarding detection, BFD) message or PW control signaling.

Generally, a BFD message is transmitted on a PW in an in-line manner, and PW control signaling may be transmitted on a PW in an in-line manner (for example, static PW state signaling), or may also be routed by using an IP (for example, PW state signaling under T-LDP). Specifically, the first OLT may send the fault notification to the far-end network node by using a "concatenated path down" diagnosis code in the BFD message, or by using a "local ingress receive error" state indication of the PW control signaling or T-LDP.

In step S703, after receiving the BFD message or the PW control signaling, the far-end network node switches a corresponding data flow on the first PW to the second PW according to PW information included in the fault notification.

When a fault occurs on the first PW, the protection method in an MPLS network application scenario is as follows:
In step S704, when it is found that the fault occurs on the first PW, one PON port or a group of PON ports that are on the first OLT and protected by the second OLT are switched to the second OLT, and the far-end network node switches a data flow corresponding to the one PON port or the group of PON ports from the first PW to the second PW.

In this step, PW fault detection may be completed by using PW OAM or T-LDP control signaling. Other control signaling with a mechanism similar to a keep-alive Keep alive mechanism, such as ANCP, may also be used to implement ESP path fault detection.

For example, when OAM runs, an OAM maintenance end point is separately configured for the first PW and the second PW. Specifically, a first MEP and a second MEP are configured on the first OLT and the far-end network node respectively, and a third MEP and a fourth MEP are configured on the second OLT and the far-end network node respectively. By configuring the OAM maintenance end points and running BFD between the MEPs, end-to-end path fault monitoring can be performed on the first PW and the second PW.

Alternatively, when PW control signaling such as T-LDP runs and a packet of the control protocol is transmitted on the first transmission path, a session end point may be separately configured on the first OLT and the far-end network node, and a session end point may be separately configured on the second OLT and the far-end network node. Then end-to-end path fault monitoring can also be separately performed on the first PW and the second PW by exchanging a hello message between session end points.

Specifically, when a fault occurs on downlink direction link of the first PW, the first OLT cannot receive a BFD message and therefore can directly sense the fault; and when a fault occurs on an uplink direction link of the first PW, the first OLT can sense the fault by receiving a BFD reverse path fault notification of the far-end network node. Similarly, when the fault occurs on uplink direction link of the first PW, the far-end network node cannot receive a BFD message and therefore can directly sense the fault; and when the fault occurs on the downlink direction link of the first PW, the far-end network node can sense the fault by receiving a BFD reverse path fault notification of the first OLT.

When it is found that the fault occurs on the first PW, on an OLT side, one PON port or a group of PON ports that are on the first OLT and protected by the second OLT are switched to a corresponding PON port on the second OLT; and on a far-end network node side, a data flow corresponding to the one PON port or the group of PON ports is switched from the first PW to the second PW.

FIG. 8 shows a structure of a PON protection apparatus provided in an embodiment of the present invention. For ease of description, only a part related to this embodiment is shown.

As shown in FIG. 8, the apparatus is based on the PON access network shown in FIG. 2, and can run on an OLT device in a PON protection system. The apparatus includes:
a path establishing module 81, configured to establish a first transmission path between a first OLT and a far-end network node, where the first transmission path is used to transmit a data flow of one PON port or a group of PON ports on the first OLT, and the first transmission path and a second transmission path that is established between a second OLT and the far-end network node serve as an active transmission path and a standby transmission path mutually;
a PON port switching module 82, configured to, when a fault occurs on an optical path connected to the first OLT, switch a PON port corresponding to the optical path to a corresponding PON port on the second OLT; and
a fault notifying module 83, configured to, when the fault occurs on the optical path, send a fault notification to the far-end network node, where the fault notification includes an identifier of the PON port corresponding to the optical path.

As an embodiment of the present invention, the PON port switching module 82 is further configured to, when a fault occurs on the first transmission path, switch one PON port or a group of PON ports that are in mutual protection with the second OLT to the corresponding PON port on the second OLT.

In addition, functions of the modules of the apparatus may run on a plurality of devices in a distributed manner and provide an overall function of the apparatus together. For example, an operation and maintenance network management system provides a function of a first path establishing module, and an OLT provides functions of the PON port switching module and the fault notifying module.

FIG. 9 shows a structure of a PON protection apparatus provided in an embodiment of the present invention. For ease of description, only a part related to this embodiment is shown.

As shown in FIG. 9, the apparatus is based on the PON access network shown in FIG. 2, and can run on a far-end network node in a PON protection system. The apparatus includes:
a path establishing module 91, configured to establish a first transmission path with a first OLT to transmit a data flow of one PON port or a group of PON ports on the first OLT; and establish a second transmission path with a second OLT to transmit a data flow of one PON port or a group of PON ports on the second OLT, where the first transmission path and the second transmission path serve as an active transmission path and a standby transmission path mutually;
a fault notification receiving module 92, configured to receive a fault notification sent by the first OLT, and obtain an identifier of a PON port corresponding to an optical path that is included in the fault notification; and
a switching module 93, configured to switch, according to the identifier of the PON port, a data flow corresponding to the corresponding PON port from the first transmission path to the second transmission path.

As an embodiment of the present invention, the switching module 93 is further configured to, when a fault occurs on the first transmission path, switch a data flow corresponding to one PON port or a group of PON ports that are on the first OLT and protected by the second OLT from the first transmission path to the second transmission path.

In addition, functions of the modules of the apparatus may run on a plurality of devices in a distributed manner and provide an overall function of the apparatus together. For example, an operation and maintenance network management system provides a function of a second path establishing module, and a far-end network node provides functions of the switching module and the fault notification receiving module.

The embodiments of the present invention are applied to the PON access network shown in FIG. 2. A path is not established for each ONU, but for one PON port or a group of PON ports of each OLT, a transmission path in active and standby protection is separately established between a far-end network node and a first OLT, and between the far-end network node and a second OLT, so as to transmit an ONU service; and a service fault is monitored. When a fault occurs on a first access optical path connected to the first OLT, a PON port of an OLT, or a transmission path between an OLT and the far-end network node, a service can be switched to a corresponding backup path in time, thereby greatly reducing complexity of configuration and management of the PON access network, reducing a performance requirement of a far-end network node, and improving system scalability.

## Claims

1. A passive optical network PON protection method, wherein the method is applied to a far-end network node (21) on a PON access network, and the method comprises:
establishing (S501) a first transmission path (23) between the far-end network node (21) and a first optical line terminal OLT (11) to transmit a data flow of one PON port or a group of PON ports on the first OLT (11); and establishing (S501) a second transmission path (25) between the far-end network node (21) and a second OLT (12) to transmit the data flow of one PON port or a group of PON ports on the second OLT (12), wherein the first transmission path (23) and the second transmission path (25) serve as an active transmission path and a standby transmission path mutually; and
when a fault occurs on an optical path connected to the first OLT (11), after the first OLT (11) switches a PON port corresponding to the optical path to a corresponding PON port on the second OLT (12), receiving (S502) a fault notification sent by the first OLT (11), and switching a data flow of the PON port corresponding to the optical path from the first transmission path (23) to the second transmission path (25), wherein the fault notification comprises an identifier of the PON port corresponding to the optical path on the second OLT (12).

2. The method according to claim 1, wherein when an OLT uplink network is an Ethernet network, both the first transmission path (23) and the second transmission path (25) are Ethernet forwarding paths, EFP.

3. The method according to claim 2, wherein the step of receiving a fault notification sent by the first OLT (11), and switching a data flow of the PON port corresponding to the optical path from the first transmission path (23) to the second transmission path (25) comprises:
obtaining the fault notification, wherein the fault notification carries information about a virtual local area network, VLAN, corresponding to the PON port that corresponds to the optical path; and
switching a corresponding data flow of the VLAN from the first transmission path (23) to the second transmission path (25) according to the information about the VLAN.

4. The method according to claim 3, wherein the step of switching a corresponding data flow of the VLAN from the first transmission path (23) to the second transmission path (25) comprises:
setting a first port corresponding to the first transmission path (23) to forbidding of sending the corresponding data flow of the VLAN, and setting a second port corresponding to the second transmission path (25) to allowing of sending the corresponding data flow of the VLAN.

5. The method according to claim 1, wherein when an OLT uplink network is a multi-protocol label switching MPLS network, both the first transmission path (23) and the second transmission path (25) are pseudo wires, PW.

6. The method according to claim 1, wherein the step of receiving a fault notification sent by the first OLT (11), and switching a data flow of the PON port corresponding to the optical path from the first transmission path (23) to the second transmission path (25) comprises:
obtaining the fault notification, wherein the fault notification carries information about a PW; and
switching the data flow from a first PW to a second PW according to the information about the PW.

7. The method according to any one of claims 1 to 6, further comprising:
when a fault occurs on the first transmission path (23), switching (S503) the data flow corresponding to the one PON port or the group of PON ports from the first transmission path (23) to the second transmission path (25).

8. A passive optical network, PON, protection method, wherein the method is applied to a first optical line terminal, OLT, (11) on a PON access network, and the method comprises:
establishing (S301) a first transmission path (23) between the first OLT (11) and a far-end network node (21) to transmit a data flow of one PON port or a group of PON ports on the first OLT (11), wherein the first transmission path (23) and a second transmission path (25) that is established between a second OLT (12) and the far-end network node (21) serve as an active transmission path and a standby transmission path mutually; and
when a fault occurs on an optical path connected to the first OLT (11), switching (S302) a PON port corresponding to the optical path to a corresponding PON port on the second OLT (12), and sending (S302) a fault notification to the far-end network node (21), so that the far-end network node (21) switches a data flow of the PON port corresponding to the optical path from the first transmission path (23) to the second transmission path (25), wherein the fault notification comprises an identifier of the PON port corresponding to the optical path.

9. The method according to claim 8, wherein when an OLT uplink network is an Ethernet network, the sending a fault notification to the far-end network node (21) specifically comprises:
sending the fault notification to the far-end network node (21) by using a client signal fail CSF message, an operation and maintenance OAM message, or an Access Node Control Protocol ANCP message.

10. The method according to claim 8, wherein when an OLT uplink network is a multi-protocol label switching, MPLS, network, the sending a fault notification to the far-end network node (21) specifically comprises:
sending the fault notification to the far-end network node (21) by using a bidirectional forwarding detection BFD message, pseudo wires, PW, control signaling, or Targeted Label Distribution Protocol T-LDP.

11. The method according to any one of claims 8 to 10, further comprising:
when a fault occurs on the first transmission path (23), switching (S303) one PON port or a group of PON ports that are in mutual protection with the second OLT (12) to the corresponding PON port on the second OLT (12).

12. A passive optical network, PON, protection apparatus, comprising:
a path establishing module (91), configured to establish a first transmission path (23) between a far-end network node (21) and a first optical line terminal, OLT, (11) to transmit a data flow of one PON port or a group of PON ports on the first OLT (11); and establish a second transmission path (25) between the far-end network node (21) and a second OLT (12) to transmit a data flow of one PON port or a group of PON ports on the second OLT (12), wherein the first transmission path (23) and the second transmission path (25) serve as an active transmission path and a standby transmission path mutually;
a fault notification receiving module (92), configured to, when a fault occurs on an optical path connected to the first OLT (11) and after the first OLT (11) switches a PON port corresponding to the optical path to a corresponding PON port on the second OLT (12), receive a fault notification sent by the first OLT (11), wherein the fault notification comprises an identifier of the PON port corresponding to the optical path on the second OLT (12); and
a path switching module (93), configured to switch a data flow of the PON port corresponding to the optical path from the first transmission path (23) to the second transmission path (25).

13. The apparatus according to claim 12, wherein the path switching module (93) is further configured to: when a fault occurs on the first transmission path (23), switch the data flow corresponding to the one PON port or the group of PON ports from the first transmission path (23) to the second transmission path (25).

14. A passive optical network, PON, protection apparatus, comprising:
a path establishing module (81), configured to establish a first transmission path (23) between a first optical line terminal, OLT, (11) and a far-end network node (21) to transmit a data flow of one PON port or a group of PON ports on the first OLT (11), wherein the first transmission path (23) and a second transmission path (25) that is established between a second OLT (12) and the far-end network node (21) serve as an active transmission path and a standby transmission path mutually;
a PON port switching module (82), configured to, when a fault occurs on an optical path connected to the first OLT (11), switch a PON port corresponding to the optical path to a corresponding PON port on the second OLT (12); and
a fault notifying module (83), configured to send a fault notification to the far-end network node (21) when the fault occurs on the optical path, wherein the fault notification comprises an identifier of the PON port corresponding to the optical path.

15. The apparatus according to claim 14, wherein the PON port switching module (82) is further configured to: when a fault occurs on the first transmission path (23), switch one PON port or a group of PON ports that are in mutual protection with the second OLT (12) to the corresponding PON port on the second OLT (12).

## Patentansprüche

1. Verfahren zum Schutz eines Passiven Optischen Netzes, PON, wobei das Verfahren auf einen entfernten Netzwerkknoten (21) in einem PON-Zugangsnetzwerk angewendet wird und das Verfahren Folgendes aufweist:
Erstellen (S501) eines ersten Übertragungspfads (23) zwischen dem entfernten Netzwerkknoten (21) und einem ersten "Optical Line Terminal", OLT, (11) zum Übertragen eines Datenflusses von einem PON-Port oder einer Gruppe von PON-Ports an dem ersten OLT (11); und Erstellen (S501) eines zweiten Übertragungspfads (25) zwischen dem entfernten Netzwerkknoten (21) und einem zweiten OLT (12) zum Übertragen des Datenflusses von einem PON-Port oder einer Gruppe von PON-Ports an dem zweiten OLT (12), wobei der erste Übertragungspfad (23) und der zweite Übertragungspfad (25) wechselseitig als aktiver Übertragungspfad und als Standby-Übertragungspfad dienen; und
wenn ein Fehler auf einem mit dem ersten OLT (11) verbundenen optischen Pfad auftritt, nachdem das erste OLT (11) einen dem optischen Pfad entsprechenden PON-Port auf einen entsprechenden PON-Port an dem zweiten OLT (12) umgeschaltet hat, Empfangen (S502) einer von dem ersten OLT (11) gesendeten Fehlerbenachrichtigung und Umschalten eines Datenflusses des dem optischen Pfad entsprechenden PON-Ports von dem ersten Übertragungspfad (23) auf den zweiten Übertragungspfad (25), wobei die Fehlerbenachrichtigung eine Kennung des dem optischen Pfad entsprechenden PON-Ports an dem zweiten OLT (12) aufweist.

2. Verfahren nach Anspruch 1, wobei, wenn ein OLT-Uplink-Netzwerk ein Ethernet-Netzwerk ist, sowohl der erste Übertragungspfad (23) als auch der zweite Übertragungspfad (25) Ethernet-Weiterleitungspfade, EFP, sind.

3. Verfahren nach Anspruch 2, wobei der Schritt des Empfangens einer vom ersten OLT (11) gesendeten Fehlerbenachrichtigung und des Umschaltens eines Datenflusses des dem optischen Pfad entsprechenden PON-Ports von dem ersten Übertragungspfad (23) auf den zweiten Übertragungspfad (25) Folgendes aufweist:
Erhalten der Fehlerbenachrichtigung, wobei die Fehlerbenachrichtigung Informationen über ein virtuelles lokales Netzwerk, VLAN, enthält, das dem PON-Port entspricht, der dem optischen Pfad entspricht; und
Umschalten eines entsprechenden Datenflusses des VLAN vom ersten Übertragungspfad (23) auf den zweiten Übertragungspfad (25) gemäß den Informationen über das VLAN.

4. Verfahren nach Anspruch 3, wobei der Schritt des Umschaltens eines entsprechenden Datenflusses des VLAN vom ersten Übertragungspfad (23) auf den zweiten Übertragungspfad (25) Folgendes aufweist:
Einstellen eines ersten Ports, der dem ersten Übertragungspfad (23) entspricht, um das Senden des entsprechenden Datenflusses des VLAN zu verbieten, und Einstellen eines zweiten Ports, der dem zweiten Übertragungspfad (25) entspricht, um das Senden des entsprechenden Datenflusses des VLAN zu erlauben.

5. Verfahren nach Anspruch 1, wobei, wenn ein OLT-Uplink-Netzwerk ein "Multi-Protocol Label Switching"-Netzwerk, MPLS-Netzwerk, ist, sowohl der erste Übertragungspfad (23) als auch der zweite Übertragungspfad (25) "Pseudo Wires", PW, sind.

6. Verfahren nach Anspruch 1, wobei der Schritt des Empfangens einer vom ersten OLT (11) gesendeten Fehlerbenachrichtigung und des Umschaltens eines Datenflusses des dem optischen Pfad entsprechenden PON-Ports von dem ersten Übertragungspfad (23) auf den zweiten Übertragungspfad (25) Folgendes aufweist:
Erhalten der Fehlerbenachrichtigung, wobei die Fehlerbenachrichtigung Informationen über ein PW enthält; und
Umschalten des Datenflusses von einem ersten PW auf einen zweiten PW gemäß den Informationen über den PW.

7. Verfahren nach einem der Ansprüche 1 bis 6, das darüber hinaus Folgendes aufweist:
wenn ein Fehler auf dem ersten Übertragungspfad (23) auftritt, Umschalten (S503) des Datenflusses, der dem einen PON-Port oder der Gruppe von PON-Ports entspricht, vom ersten Übertragungspfad (23) auf den zweiten Übertragungspfad (25).

8. Verfahren zum Schutz eines Passiven Optischen Netzes PON, wobei das Verfahren auf ein "Optical Line Terminal" OLT (11) in einem PON-Zugangsnetzwerk angewendet wird und das Verfahren Folgendes aufweist:
Erstellen (S301) eines ersten Übertragungspfads (23) zwischen dem ersten OLT (11) und einem entfernten Netzwerkknoten (21) zum Übertragen eines Datenflusses von einem PON-Port oder einer Gruppe von PON-Ports an dem ersten OLT (11), wobei der erste Übertragungspfad (23) und ein zweiter Übertragungspfad (25), der zwischen einem zweiten OLT (12) und dem entfernten Netzwerkknoten (21) erstellt wird, wechselseitig als aktiver Übertragungspfad und als Standby-Übertragungspfad dienen; und
wenn ein Fehler auf einem mit dem ersten OLT (11) verbundenen optischen Pfad auftritt, Umschalten (S302) eines dem optischen Pfad entsprechenden PON-Ports auf einen entsprechenden PON-Port an dem zweiten OLT (12) und Senden (S302) einer Fehlerbenachrichtigung an den entfernten Netzwerkknoten (21), sodass der entfernte Netzwerkknoten (21) einen Datenfluss des dem optischen Pfad entsprechenden PON-Ports von dem ersten Übertragungspfad (23) auf den zweiten Übertragungspfad (25) umschaltet, wobei die Fehlerbenachrichtigung eine Kennung des dem optischen Pfad entsprechenden PON-Ports aufweist.

9. Verfahren nach Anspruch 8, wobei, wenn ein OLT-Uplink-Netzwerk ein Ethernet-Netzwerk ist, das Senden einer Fehlerbenachrichtigung an den entfernten Netzwerkknoten (21) speziell Folgendes aufweist: Senden der Fehlerbenachrichtigung an den entfernten Netzwerkknoten (21) unter Verwendung einer "Client Signal Fail"-Meldung, CSF-Meldung, einer "Operation And Maintenance"-Meldung, OAM-Meldung, oder einer "Access Node Control Protocol"-Meldung, ANCP-Meldung.

10. Verfahren nach Anspruch 8, wobei, wenn ein OLT-Uplink-Netzwerk ein "Multi-Protocol Label Switching"-Netzwerk, MPLS-Netzwerk, ist, das Senden einer Fehlerbenachrichtigung an den entfernten Netzwerkknoten (21) speziell Folgendes aufweist:
Senden der Fehlerbenachrichtigung an den entfernten Netzwerkknoten (21) unter Verwendung einer "Bidirectional Forwarding Detection"-Meldung, BFD-Meldung, von "Pseudo Wires"-Steuersignalisierung, PW-Steuersignalisierung, oder des "Targeted Label Distribution Protocol", T-LDP.

11. Verfahren nach einem der Ansprüche 8 bis 10, das darüber hinaus Folgendes aufweist: wenn ein Fehler auf dem ersten Übertragungspfad (23) auftritt, Umschalten (S303) eines PON-Ports oder einer Gruppe von PON-Ports, die in wechselseitigem Schutz mit dem zweiten OLT (12) stehen, auf den entsprechenden PON-Port an dem zweiten OLT (12).

12. Vorrichtung zum Schutz eines Passiven Optischen Netzes, PON, die Folgendes aufweist:
ein Pfaderstellungsmodul (91), ausgebildet zum Erstellen eines ersten Übertragungspfads (23) zwischen einem entfernten Netzwerkknoten (21) und einem ersten "Optical Line Terminal", OLT, (11) zum Übertragen eines Datenflusses von einem PON-Port oder einer Gruppe von PON-Ports an dem ersten OLT (11); und Erstellen eines zweiten Übertragungspfads (25) zwischen dem entfernten Netzwerkknoten (21) und einem zweiten OLT (12) zum Übertragen eines Datenflusses von einem PON-Port oder einer Gruppe von PON-Ports an dem zweiten OLT (12), wobei der erste Übertragungspfad (23) und der zweite Übertragungspfad (25) wechselseitig als aktiver Übertragungspfad und als Standby-Übertragungspfad dienen;
ein Fehlerbenachrichtigungs-Empfangsmodul (92), ausgebildet zum, wenn ein Fehler auf einem mit dem ersten OLT (11) verbundenen optischen Pfad auftritt und nachdem das erste OLT (11) einen dem optischen Pfad entsprechenden PON-Port auf einen entsprechenden PON-Port an dem zweiten OLT (12) umgeschaltet hat, Empfangen einer von dem ersten OLT (11) gesendeten Fehlerbenachrichtigung, wobei die Fehlerbenachrichtigung eine Kennung des dem optischen Pfad entsprechenden PON-Ports an dem zweiten OLT (12) aufweist; und
ein Pfadumschaltmodul (93), ausgebildet zum Umschalten eines Datenflusses des dem optischen Pfad entsprechenden PON-Ports von dem ersten Übertragungspfad (23) auf den zweiten Übertragungspfad (25).

13. Vorrichtung nach Anspruch 12, wobei das Pfadumschaltmodul (93) darüber hinaus ausgebildet ist zum: wenn ein Fehler auf dem ersten Übertragungspfad (23) auftritt, Umschalten des Datenflusses, der dem einen PON-Port oder der Gruppe von PON-Ports entspricht, vom ersten Übertragungspfad (23) auf den zweiten Übertragungspfad (25).

14. Vorrichtung zum Schutz eines Passiven Optischen Netzes, PON, die Folgendes aufweist:
ein Pfaderstellungsmodul (81), ausgebildet zum Erstellen eines ersten Übertragungspfads (23) zwischen einem ersten "Optical Line Terminal", OLT, (11) und einem entfernten Netzwerkknoten (21) zum Übertragen eines Datenflusses von einem PON-Port oder einer Gruppe von PON-Ports an dem ersten OLT (11), wobei der erste Übertragungspfad (23) und ein zweiter Übertragungspfad (25), der zwischen einem zweiten OLT (12) und dem entfernten Netzwerkknoten (21) erstellt wird, wechselseitig als aktiver Übertragungspfad und als Standby-Übertragungspfad dienen;
ein PON-Port-Umschaltmodul (82), ausgebildet zum, wenn ein Fehler auf einem mit dem ersten OLT (11) verbundenen optischen Pfad auftritt, Umschalten eines dem optischen Pfad entsprechenden PON-Ports auf einen entsprechenden PON-Port an dem zweiten OLT (12); und
ein Fehlerbenachrichtigungsmodul (83), ausgebildet zum Senden einer Fehlerbenachrichtigung an den entfernten Netzwerkknoten (21), wenn ein Fehler auf dem optischen Pfad auftritt, wobei die Fehlerbenachrichtigung eine Kennung des dem optischen Pfad entsprechenden PON-Ports aufweist.

15. Vorrichtung nach Anspruch 14, wobei das PON-Port-Umschaltmodul (82) darüber hinaus ausgebildet ist zum: wenn ein Fehler auf dem ersten Übertragungspfad (23) auftritt, Umschalten eines PON-Ports oder einer Gruppe von PON-Ports, die in wechselseitigem Schutz mit dem zweiten OLT (12) stehen, auf den entsprechenden PON-Port an dem zweiten OLT (12).

## Revendications

1. Procédé de protection de réseau optique passif, PON, le procédé étant appliqué à un noeud de réseau distant (21) présent sur un réseau d'accès PON, le procédé comprenant les étapes consistant à :
établir (S501) un premier trajet d'émission (23) entre le noeud de réseau distant (21) et un premier terminal de ligne optique, OLT, (11) pour émettre un flux de données d'un port PON ou d'un groupe de ports PON du premier OLT (11) ; et établir (S501) un deuxième trajet d'émission (25) entre le noeud de réseau distant (21) et un deuxième OLT (12) pour émettre le flux de données d'un port PON ou d'un groupe de ports PON du deuxième OLT (12), le premier trajet d'émission (23) et le deuxième trajet d'émission (25) servant mutuellement de trajet d'émission actif et de trajet d'émission de secours ; et
lorsqu'une défaillance se produit sur un trajet optique connecté au premier OLT (11), après que le premier OLT (11) a commuté un port PON correspondant au trajet optique sur un port PON correspondant du deuxième OLT (12), recevoir (S502) une notification de défaillance envoyée par le premier OLT (11) et commuter un flux de données du port PON correspondant au trajet optique du premier trajet d'émission (23) vers le deuxième trajet d'émission (25), la notification de défaillance comprenant un identifiant du port PON correspondant au trajet optique sur le deuxième OLT (12).

2. Procédé selon la revendication 1, dans lequel, lorsqu'un réseau de liaison montante OLT est un réseau Ethernet, le premier trajet d'émission (23) et le deuxième trajet d'émission (25) sont tous deux des trajets d'expédition Ethernet, EFP.

3. Procédé selon la revendication 2, dans lequel l'étape consistant à recevoir une notification de défaillance envoyée par le premier OLT (11) et commuter un flux de données du port PON correspondant au trajet optique du premier trajet d'émission (23) vers le deuxième trajet d'émission (25) comprend les étapes consistant à :
obtenir la notification de défaillance, la notification de défaillance contenant des informations concernant un réseau local virtuel, VLAN, correspondant au port PON qui correspond au trajet optique ; et
commuter un flux de données correspondant du VLAN du premier trajet d'émission (23) vers le deuxième trajet d'émission (25) en fonction des informations concernant le VLAN.

4. Procédé selon la revendication 3, dans lequel l'étape consistant à commuter un flux de données correspondant du VLAN du premier trajet d'émission (23) vers le deuxième trajet d'émission (25) comprend les étapes consistant à :
paramétrer un premier port correspondant au premier trajet d'émission (23) sur l'interdiction d'envoyer le flux de données correspondant du VLAN, et paramétrer un deuxième port correspondant au deuxième trajet d'émission (25) sur l'autorisation d'envoyer le flux de données correspondant du VLAN.

5. Procédé selon la revendication 1, dans lequel, lorsqu'un réseau de liaison montante OLT est un réseau de commutation d'étiquettes multi-protocoles, MPLS, le premier trajet d'émission (23) et le deuxième trajet d'émission (25) sont tous deux des pseudo-fils, PW.

6. Procédé selon la revendication 1, dans lequel l'étape consistant à recevoir une notification de défaillance envoyée par le premier OLT (11) et commuter un flux de données du port PON correspondant au trajet optique du premier trajet d'émission (23) vers le deuxième trajet d'émission (25) comprend les étapes consistant à :
obtenir la notification de défaillance, la notification de défaillance contenant des informations concernant un PW ; et
commuter le flux de données d'un premier PW vers un deuxième PW en fonction des informations concernant le PW.

7. Procédé selon l'une quelconque des revendications 1 à 6, comprenant également l'étape consistant à :
lorsqu'une défaillance se produit sur le premier trajet d'émission (23), commuter (S503) le flux de données correspondant audit port PON ou au groupe de ports PON du premier trajet d'émission (23) vers le deuxième trajet d'émission (25).

8. Procédé de protection de réseau optique passif, PON, le procédé étant appliqué à un premier terminal de ligne optique, OLT, (11) présent sur un réseau d'accès PON, et le procédé comprenant les étapes consistant à :
établir (S301) un premier trajet d'émission (23) entre le premier OLT (11) et un noeud de réseau distant (21) pour émettre un flux de données d'un port PON ou d'un groupe de ports PON du premier OLT (11), le premier trajet d'émission (23) et un deuxième trajet d'émission (25) qui est établi entre un deuxième OLT (12) et le noeud de réseau distant (21) servant mutuellement de trajet d'émission actif et de trajet d'émission de secours ; et
lorsqu'une défaillance se produit sur un trajet optique connecté au premier OLT (11), commuter (S302) un port PON correspondant au trajet optique sur un port PON correspondant du deuxième OLT (12) et envoyer (S302) une notification de défaillance au noeud de réseau distant (21), afin que le noeud de réseau distant (21) commute un flux de données du port PON correspondant au trajet optique du premier trajet d'émission (23) vers le deuxième trajet d'émission (25), la notification de défaillance comprenant un identifiant du port PON correspondant au trajet optique.

9. Procédé selon la revendication 8, dans lequel, lorsqu'un réseau de liaison montante OLT est un réseau Ethernet, l'envoi d'une notification de défaillance au noeud de réseau distant (21) consiste spécifiquement à :
envoyer la notification de défaillance au noeud de réseau distant (21) au moyen d'un message de défaut de signal client, CSF, d'un message d'opération et de maintenance, OAM, ou d'un message de protocole de commande de noeud d'accès, ANCP.

10. Procédé selon la revendication 8, dans lequel, lorsqu'un réseau de liaison montante OLT est un réseau de commutation d'étiquettes multi-protocoles, MPLS, l'envoi d'une notification de défaillance au noeud de réseau distant (21) consiste spécifiquement à :
envoyer la notification de défaillance au noeud de réseau distant (21) au moyen d'un message de détection d'expédition bidirectionnelle, BFD, d'une signalisation de commande de pseudo-fils, PW, ou d'un protocole de distribution d'étiquettes ciblé, T-LDP.

11. Procédé selon l'une quelconque des revendications 8 à 10, comprenant également l'étape consistant à :
lorsqu'une défaillance se produit sur le premier trajet d'émission (23), commuter (S303) un port PON ou un groupe de ports PON qui sont en protection mutuelle avec le deuxième OLT (12) sur le port PON correspondant du deuxième OLT (12).

12. Appareil de protection de réseau optique passif, PON, comprenant :
un module d'établissement de trajet (91) configuré pour établir un premier trajet d'émission (23) entre le noeud de réseau distant (21) et un premier terminal de ligne optique, OLT, (11) pour émettre un flux de données d'un port PON ou d'un groupe de ports PON du premier OLT (11) ; et établir un deuxième trajet d'émission (25) entre le noeud de réseau distant (21) et un deuxième OLT (12) pour émettre un flux de données d'un port PON ou d'un groupe de ports PON du deuxième OLT (12), le premier trajet d'émission (23) et le deuxième trajet d'émission (25) servant mutuellement de trajet d'émission actif et de trajet d'émission de secours ;
un module de réception de notification de défaillance (92) configuré pour, lorsqu'une défaillance se produit sur un trajet optique connecté au premier OLT (11) et après que le premier OLT (11) a commuté un port PON correspondant au trajet optique sur un port PON correspondant du deuxième OLT (12), recevoir une notification de défaillance envoyée par le premier OLT (11), la notification de défaillance comprenant un identifiant du port PON correspondant au trajet optique du deuxième OLT (12) ; et
un module de commutation de trajet (93) configuré pour commuter un flux de données du port PON correspondant au trajet optique du premier trajet d'émission (23) vers le deuxième trajet d'émission (25).

13. Appareil selon la revendication 12, dans lequel le module de commutation de trajet (93) est également configuré pour : lorsqu'une défaillance se produit sur le premier trajet d'émission (23), commuter le flux de données correspondant audit port PON ou au groupe de ports PON du premier trajet d'émission (23) vers le deuxième trajet d'émission (25).

14. Appareil de protection de réseau optique passif, PON, comprenant :
un module d'établissement de trajet (81) configuré pour établir un premier trajet d'émission (23) entre un premier terminal de ligne optique, OLT, (11) et un noeud de réseau distant (21) pour émettre un flux de données d'un port PON ou d'un groupe de ports PON du premier OLT (11), le premier trajet d'émission (23) et un deuxième trajet d'émission (25) qui est établi entre un deuxième OLT (12) et le noeud de réseau distant (21) servant mutuellement de trajet d'émission actif et de trajet d'émission de secours ;
un module de commutation de port PON (82) configuré pour, lorsqu'une défaillance se produit sur un trajet optique connecté au premier OLT (11), commuter un port PON correspondant au trajet optique sur un port PON correspondant du deuxième OLT (12) ; et
un module de notification de défaillance (83) configuré pour envoyer une notification de défaillance au noeud de réseau distant (21) lorsque la défaillance se produit sur le trajet optique, la notification de défaillance comprenant un identifiant du port PON correspondant au trajet optique.

15. Appareil selon la revendication 14, dans lequel le module de commutation de port PON (82) est également configuré pour : lorsqu'une défaillance se produit sur le premier trajet d'émission (23), commuter un port PON ou un groupe de ports PON qui sont en protection mutuelle avec le deuxième OLT (12) sur le port PON correspondant du deuxième OLT (12).
